(19)

Europäisches
Patentamt
European
Patent Office
Office européen
des brevets

(11) **EP 2 322 481 A1**

(12) **EUROPEAN PATENT APPLICATION**
published in accordance with Art. 153(4) EPC

(43) Date of publication:
**18.05.2011 Bulletin 2011/20**

(21) Application number: **09811411.9**

(22) Date of filing: **24.08.2009**

(51) Int Cl.:
*C01G 37/00* (2006.01)   *C23C 22/48* (2006.01)
*C25D 3/06* (2006.01)   *C25D 3/10* (2006.01)

(86) International application number:
**PCT/JP2009/064699**

(87) International publication number:
**WO 2010/026884 (11.03.2010 Gazette 2010/10)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **05.09.2008 JP 2008228263**

(71) Applicant: **Nippon Chemical Industrial Co., Ltd.
Koto-ku, Tokyo 136-8515 (JP)**

(72) Inventors:
• **HOSHINO Shigeo
Kawasaki-shi
Kanagawa 216-0015 (JP)**
• **SHIMPO Ryokichi
Koshigaya-shi
Saitama 343-0844 (JP)**
• **TANAKA Yasuyuki
Tokyo 136-8515 (JP)**

(74) Representative: **Becker Kurig Straus
Patentanwälte
Bavariastrasse 7
80336 München (DE)**

(54) **METHOD FOR PRODUCING AQUEOUS SOLUTION CONTAINING CHROMIUM (III) SOURCE**

(57)   In a method for manufacturing an aqueous solution containing a source of chromium (III) according to the present invention, an aqueous solution containing trivalent chromium is added to an aqueous solution of an inorganic alkali under the condition of a reaction liquid temperature of 0°C or more and less than 50°C, so that the amount of the trivalent chromium is not locally excessive with respect to the amount of the alkali, to produce chromium hydroxide, and then the chromium hydroxide is dissolved in an aqueous solution of an acid to obtain an aqueous solution containing a source of chromium (III). Preferably, after production of the chromium hydroxide, filtration is performed, and the chromium hydroxide is washed with water until the conductivity of the filtrate is 5 mS/cm or less.

EP 2 322 481 A1

**Description**

Technical Field

The present invention relates to a method for manufacturing an aqueous solution containing a source of chromium (III), such as an aqueous solution of an inorganic acid chromium (III) salt or an aqueous solution of an organic acid chromium (III) salt.

Background Art

An aqueous solution of an inorganic acid chromium (III) salt or an organic acid chromium (III) salt (hereinafter, chromium means trivalent chromium unless otherwise specified) is used, as a chromium plating solution, for the surface treatment of various metals. Also, the aqueous solution is used for trivalent chromium chemical conversion treatment for zinc plating, tin plating, and the like.

As a method for manufacturing an inorganic acid chromium salt, for example, a method has been conventionally known in which sulfuric acid is added to a sodium dichromate solution obtained by subjecting ore to alkaline oxidizing roasting, the solution is reduced by an organic substance to provide a chromium sulfate solution, caustic soda or soda ash is added to the solution to produce a precipitate of chromium hydroxide or chromium carbonate, the precipitate is filtered and washed with water, and then, an inorganic acid, such as hydrochloric acid, nitric acid, and phosphoric acid, is added to the precipitate for dissolution.

Also, for chromium nitrate, one of inorganic acid chromium salts, a method is known which sequentially performs the step of compounding nitric acid, in the equivalent of produced chromium nitrate or more, with chromium trioxide (chromium (VI) oxide) to prepare a chromium trioxide-nitric acid mixed solution, and the step of mixing an excessive amount of an organic reducing agent comprising alcohol, aldehyde, or carboxylic acid derived from carbohydrate selected from monosaccharides, disaccharides, or starches, or a mixture thereof with the chromium trioxide-nitric acid mixed solution obtained by the above step to reduce chromium trioxide to produce chromium nitrate (see Patent Document 1).

Also, a method is proposed in which an inorganic acid and an organic reducing agent are added to an aqueous solution of chromic acid (VI) to reduce chromium (VI) to chromium (III) to manufacture an aqueous solution of an inorganic acid chromium salt, such as chromium nitrate and chromium chloride (see Patent Document 2).

On the other hand, for a method for manufacturing an organic acid chromium salt, for example, the following method is known as a method for manufacturing chromium oxalate (see Non-Patent Document 1). First, a sodium hydroxide solution or an aqueous solution of ammonia is added to an aqueous solution of an inorganic trivalent chromium salt, such as chromium sulfate, chromium nitrate, and chromium chloride, to neutralize the aqueous solution to obtain a precipitate of chromium hydroxide. This precipitate is dissolved in an oxalic acid solution. This liquid is concentrated to obtain chromium oxalate.

Also, a method for manufacturing an aqueous solution of an organic acid chromium (III) salt is proposed in which a mixed aqueous solution of an organic acid and an organic reducing agent, and an aqueous solution of chromic acid (VI) are mixed to reduce chromium (VI) to chromium (III) (see Patent Document 3).

Conventional Art Documents

Patent Documents

Patent Document 1: Japanese Patent Laid-Open No. 2002-339082
Patent Document 2: U.S. Patent Application No. 2007/86938
Patent Document 3: Japanese Patent Laid-Open No. 2008-19172

Non-Patent Document

Non-Patent Document 1: Encyclopaedia Chimica, Vol. 4, Compact Edition, 14th impression, KYORITSU SHUPPAN CO., LTD., September 15, 1972, p. 636

Disclosure of the Invention

Problems to be Solved by the Invention

A problem of the method in which chromium hydroxide is dissolved in an inorganic acid to manufacture an inorganic acid chromium salt is that it is very difficult to wash the chromium hydroxide precipitate, obtained by adding caustic soda or soda ash to chromium sulfate, with water, and therefore, impurities, such as sodium or sulfate, in the chromium hydroxide cannot be removed.

In the method described in Patent Document 1, for example, mixing nitric acid, in the equivalent of chromium nitrate or more, with chromium trioxide is effective in decreasing hexavalent chromium. But, depending on the conditions, the added reducing agent may react with nitric acid, rather than chromium trioxide, and as a result, NOx may be produced. Therefore, not only a deNOx apparatus is necessary, but also rapid reaction may cause a dangerous state.

A liquid in which chromium (III) oxalate obtained by the method described in Non-Patent Document 1 is dissolved in water contains ions of metal, such as Na and Fe, and anions, such as $Cl^-$, $SO_4^{2-}$, and $NO_3^-$, as trace impurities due to the starting raw materials. These trace impurities cannot be avoided because the above method is used as a method for manufacturing an aqueous solution of chromium (III) oxalate.

Also, chromium hydroxide is generally insoluble in water and has low solubility in an acidic aqueous solution. Therefore, the method for dissolving chromium hydroxide in an inorganic acid or an organic acid has low efficiency, and the concentration of the inorganic acid chromium salt or the organic acid chromium salt in the obtained aqueous solution is also restricted.

Therefore, it is an object of the present invention to provide a method for efficiently and easily manufacturing an aqueous solution containing a source of chromium (III), such as an aqueous solution of an inorganic acid chromium salt or an aqueous solution of an organic acid chromium salt, suitable for metal surface treatment, trivalent chromium chemical conversion treatment, and the like.

Means for Solving the Problems

As a result of diligent study, the present inventors have found that by using the order of adding an aqueous solution containing trivalent chromium into an aqueous solution of an inorganic alkali, chromium hydroxide having high solubility in an acidic aqueous solution can be obtained.

The present invention has been made based on the above finding and provides a method for manufacturing an aqueous solution containing a source of chromium (III) characterized by adding an aqueous solution containing trivalent chromium to an aqueous solution of an inorganic alkali under the condition of a reaction liquid temperature of 0°C or more and less than 50°C so that the amount of the trivalent chromium is not locally excessive with respect to the amount of the alkali, to produce chromium hydroxide, and then dissolving the chromium hydroxide in an aqueous solution of an acid.

Mode for Carrying Out the Invention

The present invention will be described below in detail, based on the preferred embodiment of the present invention.

The aqueous solution containing a source of chromium (III) obtained by the manufacturing method of the present invention is an aqueous solution of an inorganic acid chromium (III) salt, an organic acid chromium (III) salt, or a complex chromium (III) salt having two or more acids bonded to chromium dissolved in water.

The inorganic acid chromium salt includes chromium hydrochloride, chromium nitrate, chromium phosphate, chromium sulfate, chromium fluoride, and the like. These inorganic acid chromium salts may be basic salts. For example, chromium nitrate is a compound represented by the composition formula $Cr(OH)x(NO_3)y$, wherein $0 \leq x \leq 2$, $1 \leq y \leq 3$, and $x+y=3$, and the compound also includes basic chromium nitrate, such as $Cr(OH)_{0.5}(NO_3)_{2.5}$, $Cr(OH)(NO_3)_2$, and $Cr(OH)_2(NO_3)$, in addition to chromium nitrate, which is a normal salt represented by $Cr(NO_3)_3$. Chromium hydrochloride is represented by the composition formula $Cr(OH)xCly$, wherein $0 \leq x \leq 2$, $1 \leq y \leq 3$, and $x+y=3$, and includes $CrCl_3$, which is a normal salt, $Cr(OH)_{0.5}Cl_{2.5}$, $Cr(OH)Cl_2$, and $Cr(OH)_2Cl$, which are basic salts, and the like.

Chromium phosphate is a compound represented by the composition formula $Cr(H_{3-3/n}PO_4)_n$, wherein $2 \leq n \leq 3$, and includes $Cr(H_{1.5}PO_4)_2$, $Cr(H_{1.8}PO_4)_{2.5}$, and the like, in addition to $Cr(H_2PO_4)_3$. Chromium sulfate is represented by the composition formula $Cr(OH)x(SO_4)y$, wherein $0 \leq x \leq 3$, $0 < y \leq 1.5$, and $x+2y=3$, and includes $Cr(OH)SO_4$ and the like.

The organic acid chromium salt is a compound represented by the general formula $Cr_m(A^x)_n$. In the above general formula, A represents a residue obtained by removing a proton from an organic acid. A has a negative charge. x represents the charge of A (negative charge). m and n each represents an integer satisfying $3m+xn=0$.

The organic acid in the organic acid chromium salt is represented by $R(COOH)y$, wherein R represents an organic group, a hydrogen atom, or a single bond or a double bond; and y represents the number of carboxyl groups in the organic acid and is an integer of 1 or more, preferably 1 to 3. A in the above general formula is represented by R $(COO^-)_y$. When R is an organic group, the organic group is preferably an aliphatic group having 1 to 10 carbon atoms, particularly 1 to 5 carbon atoms. This aliphatic group may be substituted with other functional groups, for example, a hydroxyl group. Both of a saturated aliphatic group and an unsaturated aliphatic group can be used as the aliphatic group.

The complex chromium (III) salt having two or more types of acids bonded to chromium is represented by the following general formula.

[Formula 1]

$$Cr_k(OH)_l(A_1^{x_1})_{m_1}(A_2^{x_2})_{m_2}\cdots(A_n^{x_n})_{m_n}$$

(wherein $A_1$, $A_2$, ..., $A_n$ represent two or more acid residues obtained by removing a proton from an acid selected from the group consisting of an inorganic acid and an organic acid. When phosphoric acid is used as the acid, the above acid residue represents $H_2PO_4^-$ and/or $HPO_4^{2-}$. $x_1$, $x_2$, ..., $x_n$ represent a charge. However, $A_1$, $A_2$, ..., $A_n$ are not the same acid radical. $k$, $l$, $m_1$, $m_2$, ..., $m_n$ represent a real number satisfying $3k-l+x_1m_1+x_2m_2+...+x_nm_n=0$.)

When phosphoric acid is used as the acid, the ratio of the above $H_2PO_4^-$ and $HPO_4^{2-}$ is arbitrarily changed by the reaction conditions, the raw material system, and the like.

In the complex chromium (III) salt, the type of acids bonded to chromium may be selected from a combination of organic acids, a combination of inorganic acids, or both of an organic acid and an inorganic acid.

The manufacturing method of the present invention comprises the step of adding an aqueous solution containing trivalent chromium to an aqueous solution of an inorganic alkali for reaction under the condition of a reaction liquid temperature of 0°C or more and less than 50°C to manufacture chromium hydroxide (hereinafter also referred to as a chromium hydroxide manufacturing step), and the step of dissolving the chromium hydroxide in an aqueous solution of an inorganic acid or an aqueous solution of an organic acid (hereinafter also referred to as a dissolving step).

First, the chromium hydroxide manufacturing step will be described. In this step, an aqueous solution containing trivalent chromium is added to an aqueous solution of an inorganic alkali under the condition of a reaction liquid temperature of 0°C or more and less than 50°C to produce chromium hydroxide. The present inventors have found that by using the order of adding the aqueous solution containing trivalent chromium into the aqueous solution of the inorganic alkali as the order of the addition of the aqueous solution of the inorganic alkali and the aqueous solution containing trivalent chromium, unexpectedly, chromium hydroxide having high solubility in an acidic aqueous solution can be obtained. On the other hand, in a method for adding an alkali, such as sodium hydroxide, to the aqueous solution containing trivalent chromium to produce chromium hydroxide, the obtained chromium hydroxide has poor solubility in an acidic aqueous solution.

The solubility of the produced chromium hydroxide is also affected by reaction temperature, in addition to the order of the addition of the aqueous solution of the inorganic alkali and the aqueous solution containing trivalent chromium. Specifically, if the reaction liquid temperature is 50°C or more, the produced chromium hydroxide becomes an aggregate or massive easily, and therefore, chromium hydroxide having high solubility is not obtained. If the reaction liquid temperature is less than 0°C, the trivalent chromium salt and/or the inorganic alkali may be deposited. Therefore, the reaction liquid temperature is 0°C or more and less than 50°C. Particularly, when the reaction liquid temperature is 10 to 40°C, chromium hydroxide having high solubility is more easily obtained, and therefore, such reaction liquid temperature is preferred.

The reaction is neutralization reaction, and therefore, chromium hydroxide is obtained by mixing raw materials. During the reaction, preferably, the reaction system is stirred to allow reaction to occur uniformly and promote reaction. If the stirring is insufficient, the amount of the trivalent chromium may be locally excessive with respect to the amount of the alkali in the reaction system. Chromium hydroxide produced in such a state has poor solubility in an acidic aqueous solution. Therefore, it is important to perform the addition of the aqueous solution containing trivalent chromium so that the amount of the trivalent chromium is not locally excessive with respect to the amount of the alkali. From this viewpoint, it is preferred to adjust the stirring conditions so that the local occurrence of stagnant portions is avoided and uniform mixing can be performed. The state in which the amount of the trivalent chromium is locally excessive with respect to the amount of the alkali refers to, for example, a state in which the aqueous solution of the inorganic alkali is added to the aqueous solution containing trivalent chromium, contrary to the method in this step.

The speed and ratio of the addition of the aqueous solution containing trivalent chromium to the aqueous solution of the inorganic alkali, the concentration of these aqueous solutions, and the like are not particularly limited, but in terms of obtaining chromium hydroxide having high solubility, it is preferred to adjust these according to the ability of the stirrer and the manufacturing scale so that nonuniform mixing does not occur during the reaction. For the addition speed, it is preferred to gradually add the aqueous solution containing trivalent chromium into the aqueous solution of the inorganic alkali. For example, when the concentration of the aqueous solution of the inorganic alkali and the concentration of the aqueous solution containing trivalent chromium are in a preferred range described later, it is preferred to add the aqueous solution containing trivalent chromium to the aqueous solution of the inorganic alkali at a speed of 3 mol/min or less, particularly 0.01 to 2 mol/min, in terms of Cr.

Also, it is preferred to adjust the ratio of the addition of the aqueous solution containing trivalent chromium to the aqueous solution of the inorganic alkali (that is, the ratio of the amount of both aqueous solutions used) so that the pH of the reaction system is 7.0 to 12 at the reaction temperature when the addition is completed.

A water-soluble trivalent chromium salt can be used, without particular limitation, as the source of chromium in the aqueous solution containing trivalent chromium. Such a salt includes, for example, chromium chloride, chromium sulfate, chromium ammonium sulfate, chromium potassium sulfate, chromium formate, chromium fluoride, chromium perchlorate, chromium sulfamate, chromium nitrate, and chromium acetate. One of these salts can be used, or two or more of these salts can be used in combination. These salts may be used in the state of an aqueous solution or in the state of a powder. For example, "35% Liquid Chromium Chloride" and "40% Liquid Chromium Sulfate" (product names) manufactured by Nippon Chemical Industrial Co., Ltd., and commercially available chromium chloride (crystalline product) can be used. Among these salts, chromium chloride and chromium sulfate are preferably used in terms of no residual organic substance, drainage treatment, and economy.

As the aqueous solution containing trivalent chromium, one obtained by reducing hexavalent chromium in an aqueous solution containing hexavalent chromium to trivalent chromium can also be used. For example, an aqueous solution obtained by passing a sulfurous acid gas through an aqueous solution of dichromate to reduce hexavalent chromium to trivalent chromium can be used. Alternatively, an aqueous solution obtained by adding sulfuric acid to an aqueous solution of dichromic acid to reduce hexavalent chromium to trivalent chromium with an organic substance can also be used.

The concentration of chromium in the aqueous solution containing trivalent chromium is preferably 1 to 15% by weight, and particularly 2 to 6% by weight.

Alkali metal hydroxide, such as sodium hydroxide and potassium hydroxide, ammonia, and the like can be used as the inorganic alkali used in the aqueous solution of the inorganic alkali to which the aqueous solution containing trivalent chromium is added. If an organic alkali is used instead of the inorganic alkali, the chromium may remain in the filtration waste liquid after the production of chromium hydroxide because the organic alkali forms a water-soluble complex salt with the chromium. Therefore, the use of the organic alkali should be avoided.

The concentration of the inorganic alkali in the aqueous solution of the inorganic alkali is preferably 5 to 50% by weight, and particularly 10 to 40% by weight.

After the aqueous solution containing trivalent chromium is added to the aqueous solution of the inorganic alkali to produce chromium hydroxide, the slurry is filtered to separate the chromium hydroxide as a solid, and the chromium hydroxide is washed. A usual method can be used for the filtration. For example, suction filtration using a Buchner funnel can be performed. The washing after the filtration is performed using water. For example, the washing can be performed by adding water to the cake on the Buchner funnel for repulping, and further performing suction filtration, and the like. The washing is preferably performed until the conductivity of the filtrate is, for example, 5 mS/cm or less. A high conductivity of the filtrate means that a large amount of by-product salts derived from the raw materials remain in the chromium hydroxide after the washing. Such by-product salts should be removed as much as possible because when the aqueous solution containing the source of chromium (III), which is the end product of the manufacturing method of the present invention, is used as a source of chromium in a trivalent chromium plating liquid, the by-product salts are accumulated in the plating liquid. Therefore, the washing is preferably performed until the conductivity of the filtrate is the above value or less. Also, the filtration and the washing are preferably performed at a low temperature of preferably 0 to 50°C, more preferably 20 to 40°C, because the olation and oxolation of chromium, and the resulting production of a poorly soluble substance can be prevented.

After the washing, the chromium hydroxide is dried to be in a powder state, or water is added to the chromium hydroxide to provide a slurry having a predetermined concentration.

The chromium hydroxide obtained in this manner is insoluble or poorly soluble in pure water, but has high solubility in an acidic aqueous solution (for example, an acidic aqueous solution having a pH of 3 or less). The chromium hydroxide obtained in this step is in the form of fine particles and has a low degree of aggregation.

As the degree of aggregation becomes lower, the solubility in the acidic aqueous solution becomes higher. Therefore, a lower degree of aggregation is preferred.

In the present invention, the degree of aggregation is defined by MV/D. MV represents a volume average particle diameter measured by a particle size distribution measurement apparatus, and D represents an average particle diameter measured from a scanning electron microscope (SEM) image. According to this definition, a larger value of the degree of aggregation means higher aggregation properties (that is, the particles aggregate).

A specific method for measuring the degree of aggregation is as follows. Produced chromium hydroxide is sufficiently dispersed in water by a household mixer or the like, and then, the volume average particle diameter (MV) is measured by a laser diffraction scattering type particle size distribution measurement apparatus. Also, the particle diameter of 200 primary particles of the chromium hydroxide is measured with an SEM image, and the average value is the average particle diameter D with the SEM image. When the primary particle is not spherical, the maximum length across the particle is the particle diameter. A value obtained by dividing MV measured in this manner by D is the degree of aggregation.

In the chromium hydroxide obtained in this step, the degree of aggregation based on the above definition is preferably 10 or more and less than 70. If the degree of aggregation of the chromium hydroxide is 70 or more, the solubility in an acidic aqueous solution may be insufficient. Since there is a limit to the lower limit value of the degree of aggregation attainable by the current technique, the preferred lower limit value of the degree of aggregation of the chromium hydroxide is defined as 10 in the present invention. Particularly, the degree of aggregation is preferably 10 to 60.

In the chromium hydroxide obtained in this step, the average particle diameter D of the primary particles is preferably 40 to 200 nm, and more preferably 50 to 100 nm. Chromium hydroxide having such a particle diameter satisfies the above-described degree of aggregation, and therefore, the solubility in an acidic aqueous solution is particularly improved. If the average particle diameter D of the primary particles is less than 40 nm, the electrostatic attraction is strong, aggregation occurs easily, and the solubility tends to decrease. If the average particle diameter D of the primary particles is more than 200 nm, the specific surface area decreases, and portions reacted with the acid decreases, and therefore, the solubility tends to decrease.

The particle shape of the chromium hydroxide obtained in this step is not particularly limited, and can be a shape, for example, a massive shape, but is generally a spherical shape.

The chromium hydroxide obtained in this step is generally in the state of a dry powder or in the state of a slurry of the chromium hydroxide suspended in water, as described above. In terms of increasing the solubility in an acidic aqueous solution, the chromium hydroxide is preferably continuously in the state of a slurry from immediately after the preparation of the chromium hydroxide. When a slurry is made, in terms of handleability and the like, the slurry is preferably prepared so that the concentration of the chromium hydroxide is 5 to 20% by weight. Components other than the chromium hydroxide may be contained or may not be contained in the slurry. When components other than the chromium hydroxide are contained in the slurry, the components include Na, K, Cl, $SO_4$, $NH_4$, and the like. The slurry preferably contains substantially no impurity ions. The "impurity ions" in this specification mean ions other than $H^+$ and $OH^-$ ions. "Contains substantially no" means that impurity ions are not intentionally added during the preparation of the chromium hydroxide and the preparation of the slurry using the chromium hydroxide, and is intended to allow a slight amount of impurity ions unavoidably mixed. In other words, in addition to pure water and ion exchange water, tap water, industrial water, and the like containing substantially no impurity ions may be used as water used for the preparation of the chromium hydroxide and the preparation of the slurry using the chromium hydroxide.

Next, the dissolving step in the manufacturing method of the present invention will be described.

In the dissolving step, the chromium hydroxide obtained in the chromium hydroxide manufacturing step is dissolved in an aqueous solution of one or two or more acids to obtain an aqueous solution containing a source of chromium (III). The acid used in this step is at least one selected from an inorganic acid and an organic acid. The inorganic acid and the organic acid contained in the aqueous solution of the acid used in this step have a bond to chromium to form the source of chromium (III) contained in the aqueous solution containing the source of chromium (III), which is the end product.

The aqueous solution of the inorganic acid includes an aqueous solution of an inorganic acid, such as nitric acid, phosphoric acid, hydrochloric acid, sulfuric acid, and hydrofluoric acid. The aqueous solution of the organic acid includes an aqueous solution of an organic acid, such as formic acid, acetic acid, glycolic acid, lactic acid, gluconic acid, oxalic acid, maleic acid, malonic acid, malic acid, tartaric acid, succinic acid, citric acid, fumaric acid, and butyric acid. From among these, one according to the type of the target source of chromium (III) is selected and used.

The chromium hydroxide can be added to and dissolved in the aqueous solution of the acid, in a powder state, or by adding water to the chromium hydroxide to be in a slurry state. The concentration and used amount of the chromium hydroxide and the aqueous solution of the acid can be appropriately determined according to the type (composition formula) of the target source of chromium (III), and the target concentration of the target source of chromium (III) in the final aqueous solution. The chromium hydroxide obtained in the chromium hydroxide manufacturing step has high solubility, and therefore, according to the manufacturing method of the present invention, it is also easy to obtain a high-concentration aqueous solution of the source of chromium (III).

1) A method in which an aqueous solution of an acid component constituting the target source of chromium (III) previously dissolved at the desired concentration is prepared, and the chromium hydroxide is added to the aqueous solution to perform dissolution treatment; 2) a method in which an aqueous solution of an acid component constituting the target source of chromium (III) previously dissolved at a concentration lower than the desired concentration is prepared, the chromium hydroxide is added to the aqueous solution to perform primary dissolution treatment, and then, the remaining acid component is added to the aqueous solution to adjust its concentration to the desired concentration to perform secondary dissolution treatment; 3) in the case of using two or more acids, a method in which an aqueous solution of an acid of one component in acid components constituting the target source of chromium (III) dissolved is prepared, the chromium hydroxide is added to the aqueous solution to perform primary dissolution treatment, and then, the other acid component(s) is added to perform secondary dissolution treatment; or the like can be applied to the dissolution of the chromium hydroxide in the aqueous solution of the acid, but the dissolution is not particularly limited to these.

In terms of dissolving the chromium hydroxide easily and surely, the aqueous solution of an acid preferably has a low pH, specifically, preferably a pH of 3 or less, more preferably a pH of 2 or less, and most preferably a pH of 1.5 or less. The concentration of the acid in the aqueous solution of the acid is preferably in the range of 1 to 50% by weight, and particularly 5 to 50% by weight. Also, in terms of dissolving the chromium hydroxide easily and surely, it is preferred to use the chromium hydroxide corresponding to 1 g or less of Cr, with respect to 1 liter of the aqueous solution of the acid.

The dissolution of the chromium hydroxide in the aqueous solution of the acid is preferably performed at 25 to 90°C.

The aqueous solution containing the source of chromium (III) obtained by the manufacturing method of the present invention is suitably used, as a chromium plating solution, for the surface treatment of various metals. For example, the aqueous solution is used for final finish plating for decoration, and for plating provided as a layer on nickel plating. Also, the aqueous solution is suitably used for the trivalent chromium chemical conversion treatment of zinc plating, tin plating, and the like. Further, the aqueous solution is also suitably used as a replenisher solution for the bath in metal surface treatment with chromium plating, or trivalent chromium chemical conversion treatment. The "trivalent chromium chemical conversion treatment" in this specification refers to treatment in which a material to be treated is immersed in an aqueous solution containing a trivalent chromium salt as the main component to chemically produce a coating containing trivalent chromium on the material to be treated.

Also, the aqueous solution containing the source of chromium (III) obtained by the manufacturing method of the present invention is useful for a catalyst. Also, the aqueous solution of the organic acid chromium salt is useful as a raw material for manufacturing a dielectric, such as barium titanate. Chromium may be added as a trace component to a dielectric, such as barium titanate for improving its performance. The use of the aqueous solution of the organic acid chromium salt obtained by the manufacturing method of the present invention, as the source of the chromium, has the advantage of obtaining an object having a small amount of impurities because the organic component is removed during the firing of the dielectric.

Examples

The present invention will be specifically described below by way of Examples. "%" means "% by weight" unless otherwise specified.

[Examples 1 to 6]

140 g of a 10% aqueous solution of sodium hydroxide, and a 7% aqueous solution of chromium chloride obtained by adding 208 g of water to 52 g of a 35% aqueous solution of chromium chloride (manufactured by Nippon Chemical Industrial Co., Ltd.) for dilution were each placed in a container and prepared. Next, the aqueous solution of sodium hydroxide and the aqueous solution of chromium chloride were adjusted to reaction temperature shown in Table 1. The aqueous solution of chromium chloride was added to the aqueous solution of sodium hydroxide at speed shown in Table 1, while the aqueous solution of sodium hydroxide was stirred at speed shown in Table 1. The addition was performed until the pH of the reaction system was a value shown in Table 1. The produced precipitate was filtered and washed with water at 30°C, until the conductivity of the filtrate was 1 mS/cm, to obtain about 12 g of chromium hydroxide. This chromium hydroxide was suspended in pure water to obtain a slurry having a concentration of 8%. The average particle diameter and degree of aggregation of the obtained chromium hydroxide were measured. The results are described together in Table 1.

[Table 1]

| Example | Addition speed*1 ml/min | Reaction temperature °C | Stirring speed rpm | Reaction completion pH | MV μm | Average particle diameter D with SEM image nm | Degree of aggregation |
|---------|------------------------|------------------------|--------------------|------------------------|-------|----------------------------------------------|----------------------|
| 1 | 30 | 10 | 700 | 10 | 3.7 | 93 | 40 |
| 2 | 100 | 10 | 700 | 10 | 3.0 | 88 | 34 |
| 3 | 30 | 20 | 700 | 10 | 4.3 | 95 | 45 |
| 4 | 100 | 20 | 700 | 10 | 3.5 | 90 | 39 |
| 5 | 30 | 30 | 700 | 10 | 4.9 | 90 | 54 |
| 6 | 30 | 40 | 700 | 10 | 5.6 | 86 | 65 |

*1: An addition speed ot 30 ml/min corresponds to 0.02 mol/min in terms of Cr
An addition speed of 100 ml/min corresponds to 0.05 mol/min in terms of Cr

Then, each of the obtained slurries of the chromium hydroxide was added and dissolved, in an amount corresponding to a Cr content of 1 g, in 1 liter of various aqueous solutions of inorganic acids at a temperature of 25°C, or in 1 liter of various aqueous solutions of organic acids at a temperature of 50°C to obtain aqueous solutions of inorganic acid chromium salts or aqueous solutions of organic acid chromium salts. The time required for the dissolution (unit: min) is shown in Table 2-1 and Table 2-2.

[Table 2-1]

| Example | Time of dissolution in aqueous solution of inorganic acid (min) | | | |
|---------|-----------------------------------------------------------------|---|---|---|
| | Nitric acid (pH 0.3) | Phosphoric acid (pH 0.9) | Sulfuric acid (pH 0.2) | Hydrochloric acid (pH 0.2) |
| 1 | 6 | 55 | 7 | 9 |
| 2 | 7 | 58 | 9 | 8 |
| 3 | 7 | 56 | 12 | 13 |
| 4 | 8 | 59 | 14 | 11 |
| 5 | 12 | 67 | 16 | 15 |
| 6 | 15 | 75 | 19 | 18 |

[Table 2-2]

| Example | Time of dissolution in aqueous solution of organic acid (min) | | | |
|---------|---------------------------------------------------------------|---|---|---|
| | Oxalic acid (pH 0.6) | Formic acid (pH 0.5) | Malonic acid (pH 0.5) | Glycolic acid (pH 1.1) |
| 1 | 24 | 32 | 80 | 77 |
| 2 | 24 | 30 | 77 | 72 |
| 3 | 28 | 40 | 90 | 88 |
| 4 | 26 | 43 | 84 | 79 |
| 5 | 30 | 47 | 100 | 95 |
| 6 | 38 | 50 | 107 | 102 |

**EP 2 322 481 A1**

[Comparative Examples 1 to 3]

70 g of a 20% aqueous solution of sodium hydroxide, and a 7% aqueous solution of chromium chloride obtained by adding 208 g of water to 52 g of a 35% aqueous solution of chromium chloride (manufactured by Nippon Chemical Industrial Co., Ltd.) for dilution were each placed in a container and prepared. Next, the aqueous solution of sodium hydroxide and the aqueous solution of chromium chloride were adjusted to reaction temperature shown in Table 3. Contrary to Examples 1 to 6, the aqueous solution of sodium hydroxide was added to the aqueous solution of chromium chloride at speed shown in Table 3, while the aqueous solution of chromium chloride was stirred. The produced precipitate was filtered and washed with water to obtain about 12 g of chromium hydroxide. Except these, operations as in Examples 1 to 6 were performed to obtain chromium hydroxide and a slurry containing the chromium hydroxide. The average particle diameter and degree of aggregation of the obtained chromium hydroxide were measured as in Examples 1 to 6. The results are shown in Table 3.

[Table 3]

| Comparative Example | Addition speed*2 ml/min | Reaction temperature °C | MV μm | Average particle diameter D with SEM image nm | Degree of aggregation |
|---|---|---|---|---|---|
| 1 | 10 | 20 | 7.5 | 59 | 127 |
| 2 | 30 | 20 | 6.1 | 57 | 107 |
| 3 | 100 | 20 | 5.2 | 56 | 93 |
| *2: An addition speed of 10 ml/min corresponds to 0.005 mol/min in terms of Cr<br>An addition speed of 30 ml/min corresponds to 0.02 mol/min in terms of Cr<br>An addition speed of 100 ml/min corresponds to 0.05 mol/min in terms of Cr | | | | | |

Then, each of the obtained slurries of the chromium hydroxide was added and dissolved in various aqueous solutions of inorganic acids or aqueous solutions of organic acids under conditions as in Examples 1 to 6 to obtain aqueous solutions of inorganic acid chromium salts or aqueous solutions of organic acid chromium salts. The time required for the dissolution (unit: min) is shown in Table 4-1 and Table 4-2.

[Table 4-1]

| Comparative Example | Time of dissolution in aqueous solution of inorganic acid (min) | | | |
|---|---|---|---|---|
| | Nitric acid (PH 0.2) | Phosphoric acid (pH 0.9) | Sulfuric acid (pH 0.2) | Hydrochloric acid (pH 0.2) |
| 1 | >120 | >120 | >120 | >120 |
| 2 | >120 | >120 | >120 | >120 |
| 3 | 49 | >120 | 55 | 53 |

[Table 4-2]

| Comparative Example | Time of dissolution in aqueous solution of organic acid (min) | | | |
|---|---|---|---|---|
| | Oxalic acid (pH 0.6) | Formic acid (pH 0.5) | Malonic acid (pH 0.5) | Glycolic acid (pH 1.1) |
| 1 | >180 | >180 | >180 | >180 |
| 2 | >180 | >180 | >180 | >180 |
| 3 | >180 | >180 | >180 | >180 |

[Comparative Examples 4 and 5]

Operations as in Examples 1 to 6 were performed, except that the addition speed of the aqueous solution of chromium chloride, and the temperature of the aqueous solution of sodium hydroxide and the aqueous solution of chromium chloride were under conditions shown in Table 5, to obtain chromium hydroxide and a slurry containing the chromium hydroxide. The average particle diameter and degree of aggregation of the obtained chromium hydroxide were measured as in Examples 1 to 6. The results are shown in Table 5.

[Table 5]

| Comparative Example | Addition speed*3 ml/min | Reaction temperature °C | MV μm | Average particle diameter D with SEM image nm | Degree of aggregation |
|---|---|---|---|---|---|
| 4 | 30 | 50 | 6.1 | 80 | 75 |
| 5 | 30 | 90 | 7.1 | 80 | 89 |
| *3: An addition speed ot 30 ml/min corresponds to 0.02 mol/min in terms of Cr | | | | | |

Then, each of the obtained slurries of the chromium hydroxide was added and dissolved in various aqueous solutions of inorganic acids or aqueous solutions of organic acids under conditions as in Examples 1 to 6 to obtain aqueous solutions of inorganic acid chromium salts or aqueous solutions of organic acid chromium salts. The time required for the dissolution (unit: min) is shown in Table 6-1 and Table 6-2.

[Table 6-1]

| Comparative Example | Time of dissolution in aqueous solution of inorganic acid (min) | | | |
|---|---|---|---|---|
| | Nitric acid (pH 0.3) | Phosphoric acid (pH 0.9) | Sulfuric acid (pH 0.2) | Hydrochloric acid (pH 0.2) |
| 4 | 39 | >120 | 50 | 49 |
| 5 | >120 | >120 | >120 | >120 |

[Table 6-2]

| Comparative Example | Time of dissolution in aqueous solution of organic acid (min) | | | |
|---|---|---|---|---|
| | Oxalic acid (pH 0.6) | Formic acid (pH 0.5) | Malonic acid (pH 0.5) | Glycolic acid (pH 1.1) |
| 4 | >180 | >180 | >180 | >180 |
| 5 | >180 | >180 | >180 | >180 |

[Examples 7 and 8]

Operations as in Example 3 were performed, except that 195 g of a 10% aqueous solution of potassium hydroxide (Example 7) or 59 g of a 10% aqueous solution of ammonia (Example 8) was used instead of the aqueous solution of sodium hydroxide, to obtain chromium hydroxide and a slurry containing the chromium hydroxide. The average particle diameter and degree of aggregation of the obtained chromium hydroxide were measured as in Examples 1 to 6. The results are shown in Table 7.

[Table 7]

| Example | Addition speed[*4] ml/min | Reaction temperature°C | MV μm | Average particle diameter D with SEM image nm | Degree of aggregation |
|---|---|---|---|---|---|
| 7 | 30 | 20 | 4.4 | 90 | 49 |
| 8 | 30 | 20 | 4.3 | 70 | 61 |
| *4: An addition speed of 30 ml/min corresponds to 0.02 mol/min in terms of Cr | | | | | |

Then, each of the obtained slurries of the chromium hydroxide was added and dissolved in various aqueous solutions of inorganic acids or aqueous solutions of organic acids under conditions as in Examples 1 to 6 to obtain aqueous solutions of inorganic acid chromium salts or aqueous solutions of organic acid chromium salts. The time required for the dissolution (unit: min) is shown in Table 8-1 and Table 8-2.

[Table 8-1]

| Example | Time of dissolution in aqueous solution of inorganic acid (min) | | | |
|---|---|---|---|---|
| | Nitric acid (pH 0.3) | Phosphoric acid (pH 0.9) | Sulfuric acid (pH 0.2) | Hydrochloric acid (pH 0.2) |
| 7 | 5 | 54 | 8 | 7 |
| 8 | 5 | 52 | 6 | 6 |

[Table 8-2]

| Example | Time of dissolution in aqueous solution of organic acid (min) | | | |
|---|---|---|---|---|
| | Oxalic acid (pH 0.6) | Formic acid (pH 0.5) | Malonic acid (pH 0.5) | Glycolic acid (pH 1.1) |
| 7 | 28 | 40 | 86 | 79 |
| 8 | 28 | 32 | 74 | 72 |

From the above results of Examples, it is found that the chromium hydroxide obtained by the chromium hydroxide manufacturing step according to the present invention has high solubility and is easily dissolved in the aqueous solutions of the inorganic acids or the aqueous solutions of the organic acids, and therefore, according to the manufacturing method of the present invention, the aqueous solutions of the inorganic acid chromium salts or the aqueous solutions of the organic acid chromium salt can be manufactured efficiently and easily.

On the other hand, it is found that in the chromium hydroxide prepared by adding the aqueous solution of the inorganic alkali to the aqueous solution containing trivalent chromium as in Comparative Examples 1 to 3, the average particle diameter of the primary particles is small, the primary particles aggregate, and the solubility is low, and therefore, the efficiency of manufacturing the aqueous solutions of the inorganic acid chromium salts is poor. Also, it is found that even if the chromium hydroxide is prepared by adding the aqueous solution containing trivalent chromium to the aqueous solution of the inorganic alkali, the primary particles aggregate, and the solubility is low, in the case of high reaction temperature (Comparative Examples 4 and 5), and therefore, the efficiency of manufacturing the aqueous solutions of the inorganic acid chromium salts is poor.

[Examples 9 to 11]

About 12 g of chromium hydroxide was obtained as in Example 1. This chromium hydroxide was suspended in pure water to obtain a slurry having a concentration of 8%.
Then, an amount corresponding to a Cr content of 1 g was added and dissolved in 1 liter of aqueous solutions containing two acids at a temperature of 25°C to obtain aqueous solutions containing a source of chromium (III). The time required for the dissolution (unit: min) is shown in Table 9.
The composition of the aqueous solution of the acids used in each Example is as follows.
liquid A (pH: 0.2): 2.6% by weight of hydrochloric acid, 5.2% by weight of nitric acid

liquid B (pH: 0.4): 3.3% by weight of phosphoric acid, 2.5% by weight of sulfuric acid
liquid C (pH: 0.3): 2.6% by weight of hydrochloric acid, 2.2% by weight of oxalic acid
[Table 9]

|  | Type of aqueous solution of acids | Dissolution time (min) |
|---|---|---|
| Example 9 | A | 20 |
| Example 10 | B | 18 |
| Example 11 | C | 25 |

[Use Example 1]

A plating liquid for trivalent chromium plating having the following composition was prepared in a rectangular plating bath having an internal volume of 8 liters. Chromium plating was performed under the conditions of a bath temperature of 50°C and a current density of 40 A/dm$^2$, using a mild steel round bar as the material to be plated, and a carbon plate as the anode. The amount of chromium consumed and the concentration of chromium in the bath were calculated from the weight measurement of the round bar before and after the plating. When the concentration of chromium in the plating liquid decreased by 1 to 2 g/liter, the aqueous solution of chromium oxalate obtained in Example 3 was added to the plating liquid in an amount corresponding to the electrodeposited metal chromium, and chromium plating was continuously performed while the plating liquid was sufficiently stirred. As a result, good chromium plating was obtained.
(Composition of Plating Liquid)
Chromium chloride hexahydrate     300 g/L
Boric acid                                        30 g/L
Glycine                                            50 g/L
Ammonium chloride                      130 g/L
Aluminum chloride hexahydrate     50 g/L

Industrial Applicability

The present invention can provide a method in which an aqueous solution containing a source of chromium (III) suitable for metal surface treatment, trivalent chromium chemical conversion treatment, and the like can be manufactured efficiently and easily.

**Claims**

1.  A method for manufacturing an aqueous solution comprising a source of chromium (III), **characterized by** adding an aqueous solution comprising trivalent chromium to an aqueous solution of an inorganic alkali under the condition of a reaction liquid temperature of 0°C or more and less than 50°C so that the amount of the trivalent chromium is not locally excessive with respect to the amount of the alkali, to produce chromium hydroxide, and then dissolving the chromium hydroxide in an aqueous solution of an acid.

2.  The manufacturing method according to claim 1, wherein the aqueous solution of an acid is an aqueous solution in which an organic acid or an inorganic acid is dissolved.

3.  The manufacturing method according to claim 1, wherein the aqueous solution of an acid is an aqueous solution in which two or more acids are dissolved.

4.  The manufacturing method according to claim 1, wherein after production of the chromium hydroxide, filtration is performed, and the chromium hydroxide is washed with water until the conductivity of a filtrate is 5 mS/cm or less.

5. The manufacturing method according to any of claims 1 to 4, wherein the chromium hydroxide has a degree of aggregation of 10 or more and less than 70, and an average particle diameter D of 40 to 200 nm, the degree of aggregation being represented by the ratio MV/D of a volume average particle diameter MV measured by a particle size distribution measurement apparatus to an average particle diameter D measured from a scanning electron microscope image.

6. The manufacturing method according to any of claims 1 to 5, wherein the chromium hydroxide to be dissolved in the aqueous solution of an acid is in a state of a slurry of the chromium hydroxide suspended in water, and wherein the slurry comprises substantially no impurity ion.

7. An aqueous solution comprising a source of chromium (III) obtained by a manufacturing method according to any of claims 1 to 6, used for metal surface treatment or trivalent chromium chemical conversion treatment.

## INTERNATIONAL SEARCH REPORT

International application No.

PCT/JP2009/064699

### A. CLASSIFICATION OF SUBJECT MATTER
*C01G37/00*(2006.01)i, *C23C22/48*(2006.01)i, *C25D3/06*(2006.01)i, *C25D3/10*
(2006.01)i

According to International Patent Classification (IPC) or to both national classification and IPC

### B. FIELDS SEARCHED

Minimum documentation searched (classification system followed by classification symbols)
C01G37/00, C23C22/48, C25D3/06, C25D3/10

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)
JSTPlus/JMEDPlus/JST7580(JDreamII)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2006-249518 A (Koka Chrome Industry Co., Ltd.),<br>21 September 2006 (21.09.2006),<br>claim 4; examples<br>(Family: none) | 7<br>1-6 |
| X<br>A | JP 2002-322599 A (Shigeo HOSHINO),<br>08 November 2002 (08.11.2002),<br>paragraph [0018]<br>(Family: none) | 7<br>1-6 |
| P,X | WO 2008/136223 A1 (The Nippon Chemical Industrial Co., Ltd.),<br>13 November 2008 (13.11.2008),<br>paragraph [0021]; claims; examples<br>(Family: none) | 1-7 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 05 November, 2009 (05.11.09) | 17 November, 2009 (17.11.09) |

| Name and mailing address of the ISA/<br>Japanese Patent Office | Authorized officer |
|---|---|
| Facsimile No. | Telephone No. |

Form PCT/ISA/210 (second sheet) (April 2007)

**INTERNATIONAL SEARCH REPORT**

International application No.

PCT/JP2009/064699

C (Continuation). DOCUMENTS CONSIDERED TO BE RELEVANT

| Category* | Citation of document, with indication, where appropriate, of the relevant passages | Relevant to claim No. |
|---|---|---|
| A | JP 02-008373 A (Toshio HANTANI),<br>11 January 1990 (11.01.1990),<br>claims; examples<br>(Family: none) | 1-7 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002339082 A
- US 200786938 A
- JP 2008019172 A

**Non-patent literature cited in the description**

- Encyclopaedia Chimica. KYORITSU SHUPPAN CO., LTD, 15 September 1972, vol. 4, 636